# EUROPEAN PATENT APPLICATION

(11) **EP 1 722 244 A1**
(43) Date of publication of application: **15.11.2006**
(21) Application number: 05252945.0
(22) Date of filing: 12.05.2005
(51) Int. Cl.: G01R 31/00, G09B 23/18

(54) **Fault simulation system and a method for fault simulation**

(71) Applicant: Degem Systems Limited, Rosh Ha'ayin 48091 (IL)
(72) Inventor: Sofer, David, Shoham 73142 (IL)
(74) Representative: Whiting, Gary

(57) **Abstract**

A method for fault simulation that includes: providing an end user with a system that allows the user to measure, by measurement equipment, electrical signals representative of electrical signals generated by at least one component of a vehicle; and executing an interactive simulation of at the least one component of the vehicle; wherein the interactive simulation includes generating the electrical signals. A system that includes: a signal generator adapted to generate electrical signals representative of electrical signals generated by at least one component of a vehicle; an interface unit adapted to receive the generated electrical signals and to allow measurement equipment to measure the generated electrical signals; and a computer readable medium having stored thereon a set of instructions, the set of instructions, when executed by a processor, cause the processor to control an interactive simulation of at the least one component of the vehicle; wherein the interactive simulation comprises generating the electrical signals.

## Description

### FIELD OF THE INVENTION

This invention relates to a fault simulation system and to a method for fault simulation.

### BACKGROUND OF THE INVENTION

Vehicle technicians are required to repair vehicles that are getting more complex as time goes by. A typical modern vehicle includes a large amount of electrical circuits, microprocessors and the like.

In order to train technicians some prior art training methods were suggested. A first training method involves providing a vehicle. Additional methods are described in U.S. patent application serial number US 2003/0186199 of McCool et al., and in U.S. patent 4943238 of Gregorio. McCool describes a virtual environment in which technicians can perform virtual measurements, while Grogorio describes a relatively limited and hard-wired simulator.

There is a growing need to provide an efficient faults simulator system and method for training a vehicle technician.

### SUMMARY OF THE INVENTION

A system that includes: a signal generator adapted to generate electrical signals representative of electrical signals generated by at least one component of a vehicle; an interface unit adapted to receive the generated electrical signals and to allow measurement equipment to measure the generated electrical signals; and a computer readable medium having stored thereon a set of instructions, the set of instructions, when executed by a processor, cause the processor to control an interactive simulation of at the least one component of the vehicle; wherein the interactive simulation comprises generating the electrical signals.

Conveniently, the interface unit includes many test points. Conveniently, the signal generator includes an interface adapted to receive the generated electrical signals and to allow measurement equipment to measure the generated electrical signals. Conveniently, the interface unit includes multiple relays for selectively providing electrical signals to selected test points. Conveniently, the interface unit includes a resistor network for selectively introducing a selected resistance between two test points.

According to an embodiment of the invention, the interactive simulation includes receiving an input from an end user representative of a measurement executed by the end user by using the measurement equipment. Conveniently, the interactive simulation includes evaluating the input provided by the end user.

Conveniently, the system includes a computer that includes a processor. Conveniently, the computer is adapted to receive set of instruction updates.

A system that includes: a signal generator adapted to generate electrical signals representative of electrical signals generated by at least one component of a vehicle; an interface unit adapted to receive the generated electrical signals and to allow measurement equipment to measure the generated electrical signals; and a computer, connected to the signal generator, the computer is adapted to execute an interactive simulation of at least one component of a vehicle; wherein the interactive simulation comprises generating the electrical signals.

A method for fault simulation that includes: providing an end user with a system that allows the user to measure, by measurement equipment, electrical signals representative of electrical signals generated by at least one component of a vehicle; and executing an interactive simulation of at the least one component of the vehicle; wherein the interactive simulation includes generating the electrical signals.

Conveniently, the executing includes relaying electrical signals to selected test points of the system. Conveniently, the executing includes providing a selected resistance between selected test points. Conveniently, the interactive simulation includes receiving an input from an end user representative of a measurement executed by the end user by using the measurement equipment. Conveniently, the method further includes evaluating the input provided by the end user. Conveniently, the method includes updating the interactive simulation.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:

Figure 1 illustrates a fault simulation system, according to an embodiment of the invention;

Figure 2 illustrates a front panel of a signal generator, according to an embodiment of the invention;

Figure 3 illustrates a front panel of the electrical break out box, according to an embodiment of the invention;

Figure 4 illustrates various components of the signal generator, according to an embodiment of the invention;

Figure 5 illustrates a digital to analog converter board 240, according to an embodiment of the invention;

Figures 6-9 illustrate, in greater detail, various components of an interface board, according to an embodiment of the invention;

Figures 10-12 illustrate, in greater detail, various components of a EBOB, according to an embodiment of the invention;

Figures 13-16 illustrate an exemplary screen sequence that is displayed during an interactive simulation, according to an embodiment of the invention; and

Figure 17 is a flow chart illustrating a method for training an end user, box, according to an embodiment of the invention.

### DETAILED DESCRIPTION OF THE DRAWINGS

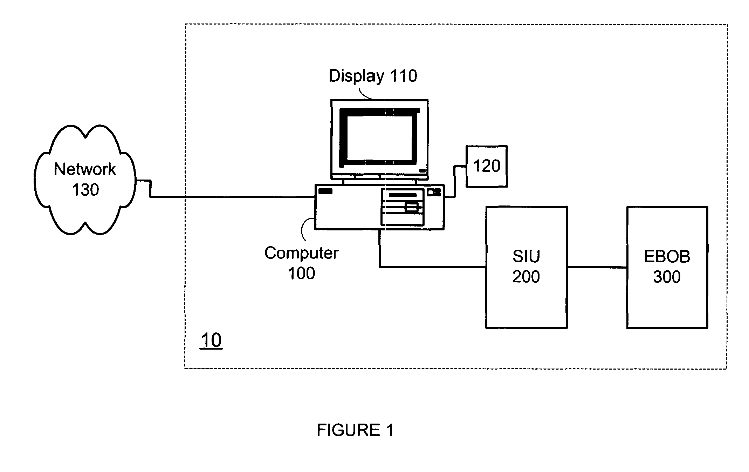

Figure 1 illustrates a system 10, according to an embodiment of the invention. The system 10 includes a computer 100, a signal generator (SIU) 200, such as but not limited to the eAT-301 of Degem Systems Ltd., and an interface unit (EBOB) 300, such as but not limited to the Eat-306 of Degem Systems Ltd. The EBOB is also referred to as switching and interface unit 300.

The computer 100 has various components including a processor, storage units, communication cards and interfaces and the like. The processor executes a set of instructions that causes it to control an interactive simulation. This set of instructions is also referred to as courseware or software.

The courseware or software can be stored in a computer readable medium such as but not limited to a magnetic medium, an optical medium, a magnetic medium and the like. Said medium can include removable medium (such as but not limited to disks, diskettes, compact disks, tapes, disks on key) and can include non-removable medium (such as but not limited to storage units, memory cards).

The medium can be accessed over various networks such as various LANs, WANs, the Internet and the like.

The computer 100, and especially its processor communicates with SIU 200 such as to control the signals generated by SIU 200. The computer 100 is also connected to a display 110 and to loud speakers 120 in order to provide audio-visual content to an end user.

The computer 100 is capable of controlling an interactive simulation of one or more components of a vehicle. The interactive simulation includes, for example, explaining the structure and/or the operation of one or more components of the vehicle, instructing the end user to perform a measurement of an electrical signal, generating a signal representative of an electrical signal provided by that one or more component, allowing the end user to measure that electrical signal by measurement equipment, receiving input representative of the measurement and evaluating the measurement. The generated electrical signals can represent a malfunctioning component, but this is not necessarily so.

Conveniently, computer 100 is connected to a network 130 and can receive updates over this network.

The SIU 200 is adapted to generate various direct current (DC) and alternating current (AC) electrical signals. SIU 200 is also adapted to provide a certain resistance between two test points. This resistance as well as the generated electrical signals conveniently resemble the electrical signals or resistance that is measured when troubleshooting a vehicle.

The SIU 200 acts as a computer-controller signal generator that is controlled by a courseware and a software that are executed by the computer. SIU 200 receives commands that can set the required voltage level, set the required current level, set the required resistance, set a required signal shape, select test points, and controls a provision of required electrical signal to the selected test points.

The test points receive the generated electrical signals and allow these signals to be measured by measurement equipment, such as but not limited to industry standard measurement equipment used by vehicle repair technicians. The latter can include a digital multi-meter and a digital oscilloscope.

According to an embodiment of the invention the EBOB 300 is designed such as to emulate the electrical interface that is used during vehicle testing. The electrical interface is usually connected to the electronic control module (ECU) of a vehicle and allows a technician to measure electrical signals generated by one or more component of the vehicle.

The system 10 emulates the vehicle and the vehicle service environment. The courseware can be tailored according to the vehicle manufacturer troubleshooting procedures and shop manuals. The manufacturer's troubleshooting procedures specify flowcharts that consist of measuring signals at predetermined test points. These flowcharts can be displayed during the interactive simulation and the measurement can be executed by the end user and fed to the system 10.

Conveniently, the end user can use, during the interactive simulation, the same measurement equipment that is used in the vehicle service environment.

According to an embodiment of the invention the electrical signals can be measured by accessing test points of EBOB 300.

Additionally or alternatively, the SIU 200 can also include an interface adapted to receive the generated electrical signals and to allow measurement equipment to measure the generated electrical signals.

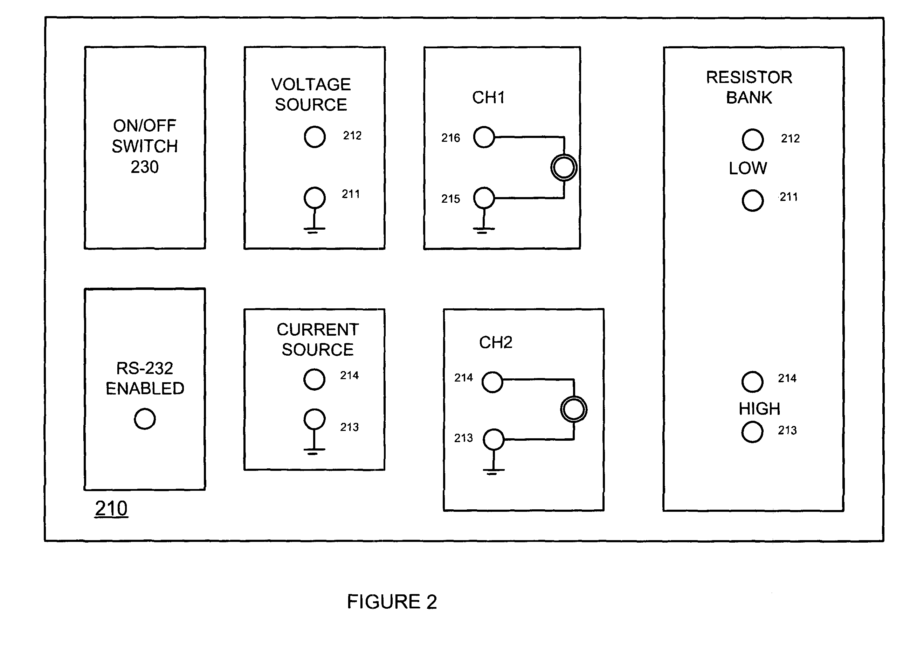

Figure 2 illustrates a front panel 210 of SIU 200, according to an embodiment of the invention.

The front panel 210 is an interface that includes an on/off switch 230, test points 211 and 212 denoted "voltage supply", test points 213 and 214 denoted "current supply", test points 215 and 216 denoted "CH1", test points 217 and 218 denoted "CH2", test points 219 and 220 denoted "resistor bank low", and test points 221 and 222 denoted "resistor bank high".

The front panel 210 also includes a RS232 communication indicator

Voltage can be measured by a multi-meter that is connected between test points 211 and 212. Current can be measured by a multi-meter that is connected between test points 213 and 214. Various signals can be measured by an oscilloscope that is connected to test points 215 and 216 or to test points 217 and 218. Low resistance values can be measured by connecting a multi-meter between test points 219 and 220. High resistance values can be measured by connecting a multi-meter between test points 221 and 222. Conveniently, test points 211, 213, 215 and 217 are grounded.

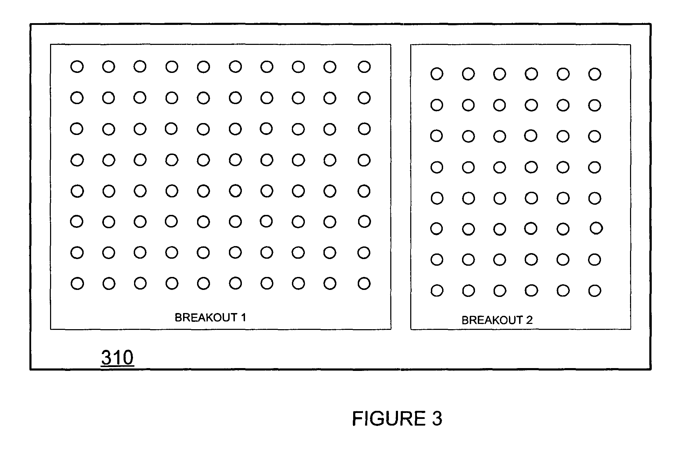

Figure 3 illustrates the front panel 310 of EBOB 300, according to an embodiment of the invention. The EBOB 300 and especially its front panel are conveniently designed such as to resemble an interface unit that is used to test a certain vehicle. In this case the EBOB was designed to emulate an interface unit that has one hundred twenty one test points.

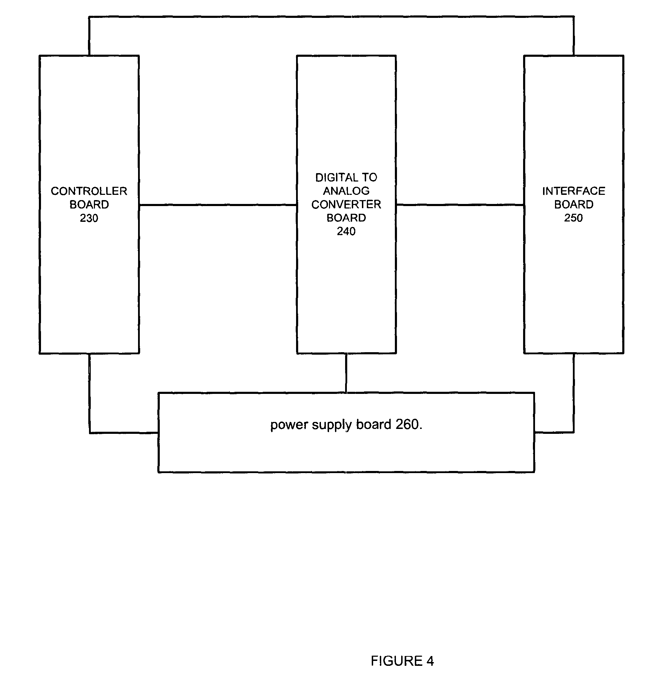

Figure 4 illustrates various components of the signal generator 200, according to an embodiment of the invention.

The signal generator 200 includes four printed boards: a controller board 230, a digital to analog converter board 240, an interface board 250 and a power supply board 260.

The controller board 230 can have various configurations. The inventors used a controller board 230 that includes a Windbond W77C32/40 microcontroller, a two hundred and fifty six kilobit flash memory unit, a thirty two kilobit RAM unit and sixteen eight-bit I/O ports. The controller board 230 outputs an eight bit control word (AD0-AD7) that determines the amplitude of analog signal generated by the digital to analog converter board 240. It also outputs five chip select signals (CS 11 - CS15) that control various components including relays, integrated circuits and the like.

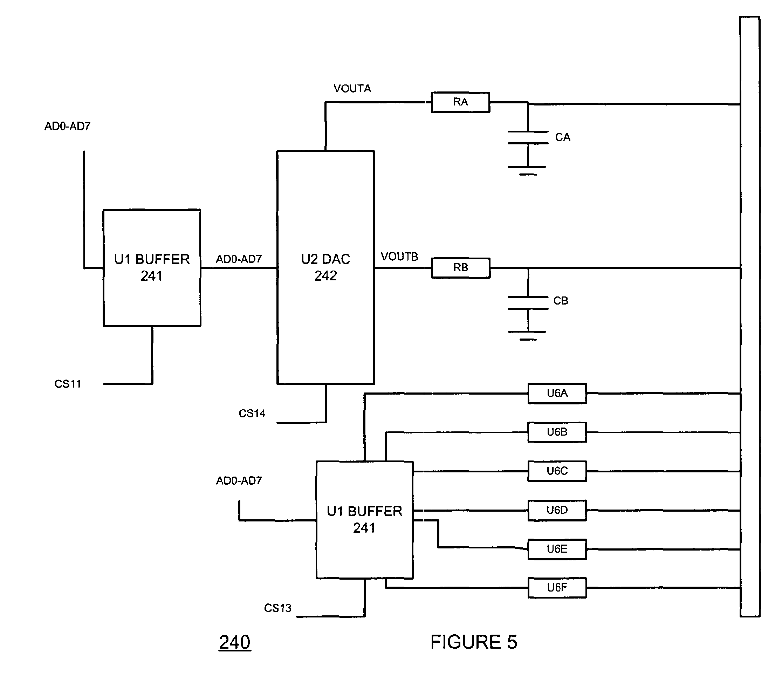

Figure 5 illustrates a digital to analog converter board 240, according to an embodiment of the invention.

The digital to analog converter board 240 includes a AD8582 twelve bit digital to analog converter U2 242 that is controlled by ADO-AD7 and CS11. The control signals are sent to the digital to analog converter U2 242 from the controller board 230 and are stored at a buffer U1 241 that is connected to the digital to analog converter U2 242. An additional integrated circuit U5 245 receives AD0-AD7 and controls seven open collector ULN2003A drivers U6A-U6G 246A- 246G for controlling the resistor network.

The digital to analog converter U2 242 provides two output voltages denoted VOUTA and VOUTB, as well as a two and a half volts reference voltage VREF.

VOUTA is provided to an output connector J3 248 via a low pass filter that includes RA 243 and CA 244. VOUTB is provided to an output connector J3 248 via a low pass filter that includes RB 247 and CB 249.

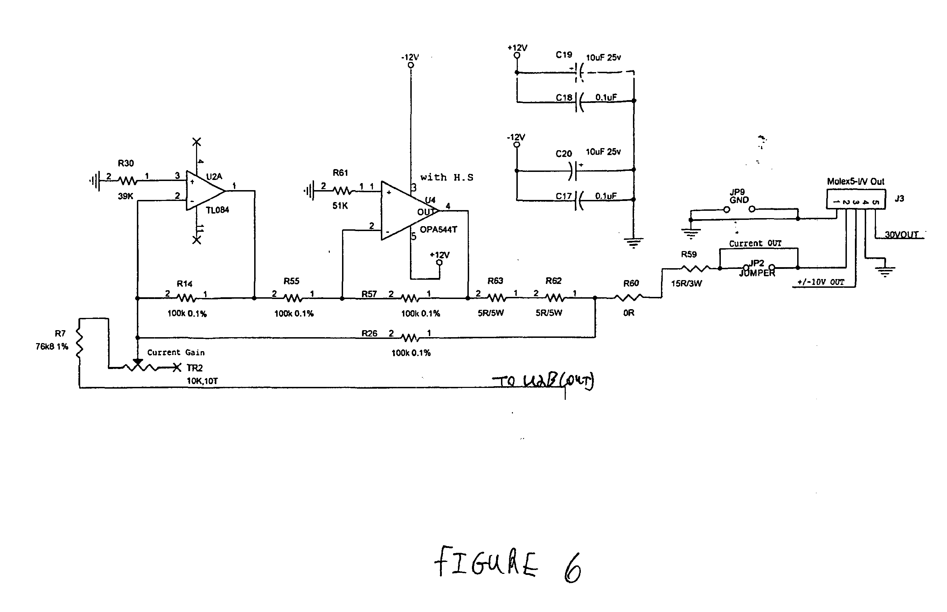

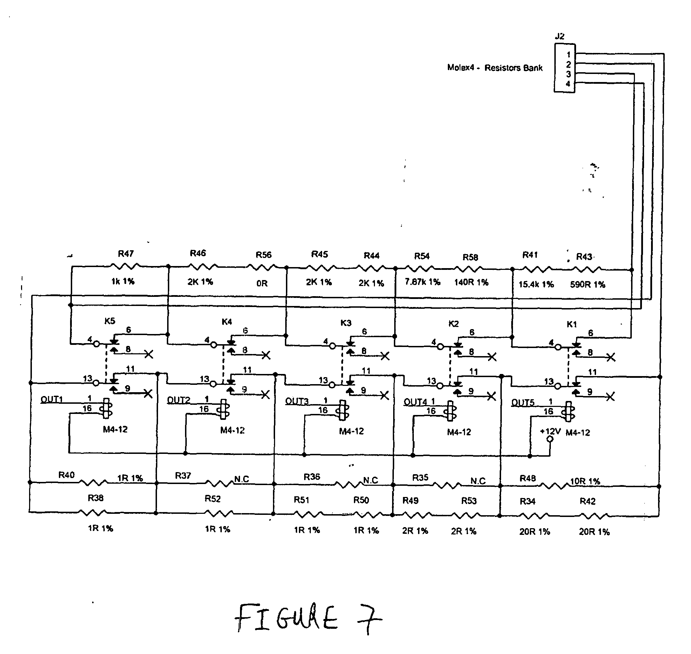

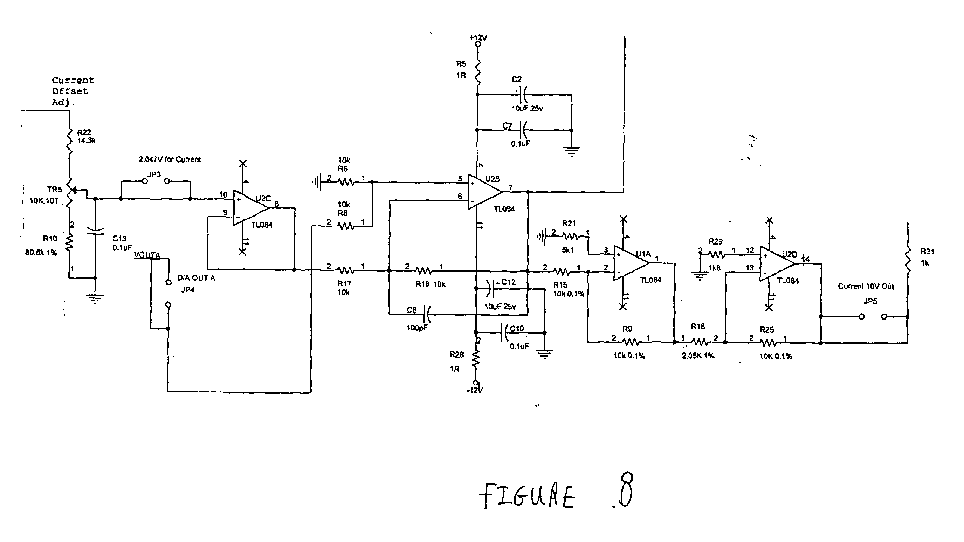

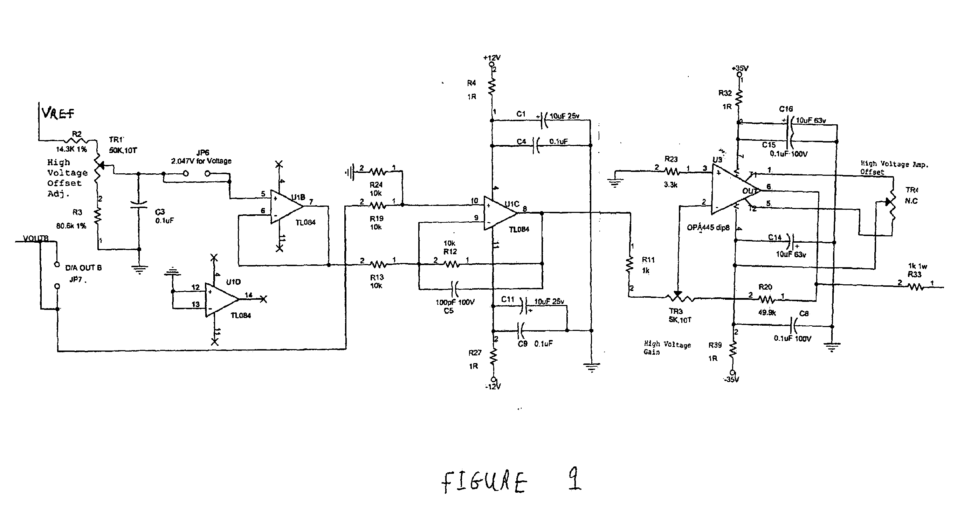

Figures 6-9 illustrate, in greater detail, various components of the interface board 250, according to an embodiment of the invention.

The interface board 250 includes multiple operational amplifiers, a resistor network as well as multiple resistors and capacitors.

Conveniently, resistors and capacitors that are connected to an input or an output of an operational amplifier are referred to as components that are associated with that operational amplifier.

The following tables illustrate the connections between various components of the interface board 250. The first table illustrates the connections between the various operational amplifiers and other components. The second table illustrates the connections between the relays and other components. The third table illustrates the connections between the various potentiometers and other components. The fourth table illustrates the connections between resistors and capacitors and other components. For simplicity of explanation redundant data was removed from the tables.

**TABLE 1**

| Operational amplifier | Positive input PI | Negative input (NI) | Negative offset input (NOI) | Positive offset input (POI) | Output (OUT) |
|---|---|---|---|---|---|
| U1B | C3, TR5, TR1(W) | UIB(OUT), R13 | | | U1B(NI), R13 |
| U1C | R19, R24 | R13, R12, C5 | R4, C1, C4 | C11, C9, R27 | R11 |
| U3 | R23 | TR3(W) | C15, C16, R32 | C8, C14, R39 | TR4, R20, R33 |
| U2C | TR5(W) | U2C(OUT), R17 | | | U2C(NI), R17 |
| U2B | R6, R8 | R17, R16, C6 | C2, C7, R5 | C10, C12, R28 | C6, R7 |
| U1A | R21 | R15 | | | R9, R18 |
| U2D | R29 | R18, R25 | | | R25, R31 |
| U2A | R30 | R14, TR2(W) | | | R14, R55 |
| U4 | R61 | R55, R57 | -12V | +12V | |

**TABLE 2**

| | First normally open contact | First normally closed contact | First ground terminal | Second normally open contact | Second normally closed contact | Second ground terminal | Control |
|---|---|---|---|---|---|---|---|
| K1 | Not connected (NC) | J2(3), R43 | R41, R58 | NC | J2(1), R48, R42 | R48, R35, R34, R53 | OUT5 |
| K2 | NC | R41, R58 | R44, R54 | NC | R48, R35, R34, R53 | R35, R36, R49, R50 | OUT4 |
| K3 | NC | R44, R54 | R45, R56 | NC | R35, R36, R49, R50 | R36, R37, R51, R52 | OUT3 |
| K4 | NC | R45, R56 | R46, R47 | NC | R36, R37, R51, R52 | R37, R40, R38, R52 | OUT2 |
| K5 | NC | R46, R47 | R47, J2(4) | NC | R37, R40, R38, R52 | J2(2), R40, R38 | OUT1 |

**TABLE 3**

| Potentiometer | First terminal | Second terminal | Wiper terminal |
|---|---|---|---|
| TR1 | R2 | R3 | C3, U1B(PI) |
| TR2 | R7 | NC | R26, R14, |
| | | | U2A(NI) |
| TR3 | R11 | R20 | U3(NI) |
| TR4 | U3(OUT_T1) | U3(OUT_T2) | U3(NOI) |
| TR5 | R22 | R10 | U2C(PI) |

**TABLE 5**

| Component | First end | Second end | Component | First end | Second end |
|---|---|---|---|---|---|
| R2 | VREF | TR1 | R3 | TR1 | G |
| C3 | UIB(PI) | Ground (G) | R24 | G | U1C(PI) |
| R19 | VOUTB | U1C(PI) | R13 | U1B(OUT) | R12 |
| R12 | R13 | U1C(OUT) | C5 | R13 | U1C(OUT) |
| R27 | -12V | C9 | C9 | G | C11 |
| C11 | C9 | G | R4 | +12V | C1 |
| C1 | G | R4 | C4 | G | R4 |
| R11 | U1C(OUT) | TR3 | R39 | -35V | C8 |
| C8 | G | R39 | R20 | R33 | TR3 |
| C14 | U3(POI) | G | C15 | G | R32 |
| C16 | G | R32 | R32 | U3(POI) | +35V |
| R33 | R20 | ±30VOUT | R22 | VREF | TR5 |
| R10 | G | TR5 | C13 | G | TR5 |
| R6 | G | U2B(PI) | R8 | R6 | VOUTA |
| R17 | U2C(OUT) | R16 | R16 | R17 | R15 |
| C8 | R17 | U2B(OUT) | R28 | -12V | C10 |
| C10 | G | R28 | C12 | R28 | G |
| R15 | R16 | U1A(NI) | C7 | G | R5 |
| C2 | G | R5 | R5 | +12V | U2B(NOI) |
| R9 | U1A(NI) | U1A(OUT) | R18 | R9 | R25 |
| R25 | U2D(IN) | U2D(OUT) | R29 | G | U2D(PI) |
| R31 | R25 | ±10VOUT | R7 | U2B(OUT) | TR2 |
| R30 | G | U2A(PI) | R14 | U2A(NI) | U2A(OUT) |
| R55 | R14 | R57 | R57 | R55 | R63 |
| R61 | G | U4(PI) | R57 | R55 | R63 |
| R63 | R57 | R62 | R26 | TR2(W) | R62 |
| R60 | R62 | R59 | R59 | R60 | ±10VOUT |
| R43 | J2(3) | R41 | R58 | R41 | R54 |
| R44 | R54 | R45 | R56 | R45 | R46 |
| R47 | R46 | J2(4) | R48 | J2(1) | R35 |
| R36 | R35 | R37 | R37 | R40 | R36 |
| R40 | R37 | J2(2) | R36 | J2(2) | R52 |
| R51 | R52 | R50 | R49 | R50 | R53 |
| R34 | R53 | R42 | R42 | R34 | J2(1) |

The interface board 250 amplifies VOUTA such as to provide an output voltage (denoted ±30VOUT) that ranges between plus to minus thirty volts and is provided to test points 214 and 216. It is also supplied to EBOB 300.

The amplification is performed by three TL084 operational amplifiers (U1B, U1C, U1D and U3) and the resistors and capacitors that are connected to these operational amplifiers.

U1B and its associated resistors and capacitor perform voltage offset compensation. They convert an input voltage that ranges between zero and 4094mV to an output voltage that ranges between ±2047mV.

U1C and its associated resistors and capacitor perform low pass filtering that eliminates unwanted high frequency components or noise.

U3 and its associated resistors and capacitor perform high voltage amplification to provide an output voltage (denoted +30VOUT) that ranges between plus to minus thirty volts.

Potentiometer TR1, which is connected to an input of U1B, adjusts the voltage offset. Potentiometer TR3, that is connected to an input of U3 adjusts the full scale voltage output.

VOUTB is amplified by operational amplifiers U2C, U2B, U1A and U1A and their associated resistors and capacitors to provide an output voltage (denoted ±10 VOUT) and is provided to test point 218.

VOUTB is converted to an output current (denoted Current OUT) by operational amplifiers U2A and U4 and their associated resistors and capacitor. This current can range between plus to minus two hundred and fifty mili-Amperes. U2A and U4 are connected, via multiple resistors to an output of U2B.

Operational amplifier U2C and its associated resistors and capacitor perform voltage offset compensation. They convert an input voltage that ranges between zero and 4094mV to an output voltage that ranges between ±2047mV.

Operational amplifier U2B and its associated resistors and capacitor perform low pass filtering that eliminates unwanted high frequency components or noise.

U4 and its associated resistors and capacitor perform high current amplification.

Potentiometer TR5, which is connected to an input of U2C, adjusts the current offset. Potentiometer TR2, which is connected to the output of U2B, adjusts the full scale current.

SIU 200 includes a resistor network that includes high impedance resistors that are serially connected to each other and can be selectively connected between test points 221 and 222. The resistor network also includes low impedance resistors that can be selectively connected between test points 219 and 220.

Five relays K1-K5 with double change-over contacts are controlled by control signals OUT1-OUT5 and selectively connect one or more resistors to the test points.

The power supply board 260 provides a twelve volts voltage to the controller board 230. It supplies plus and minus twelve volts voltage and plus and minus thirty six volts voltage to the interface board 250. It also supplies a five volts voltage to the digital to analog converter board 240.

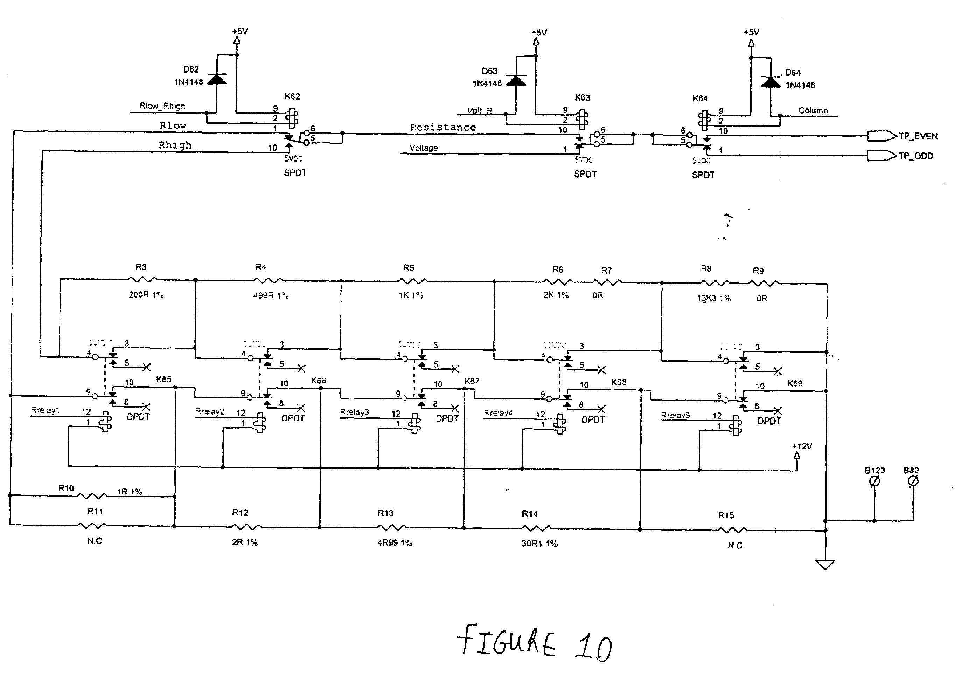

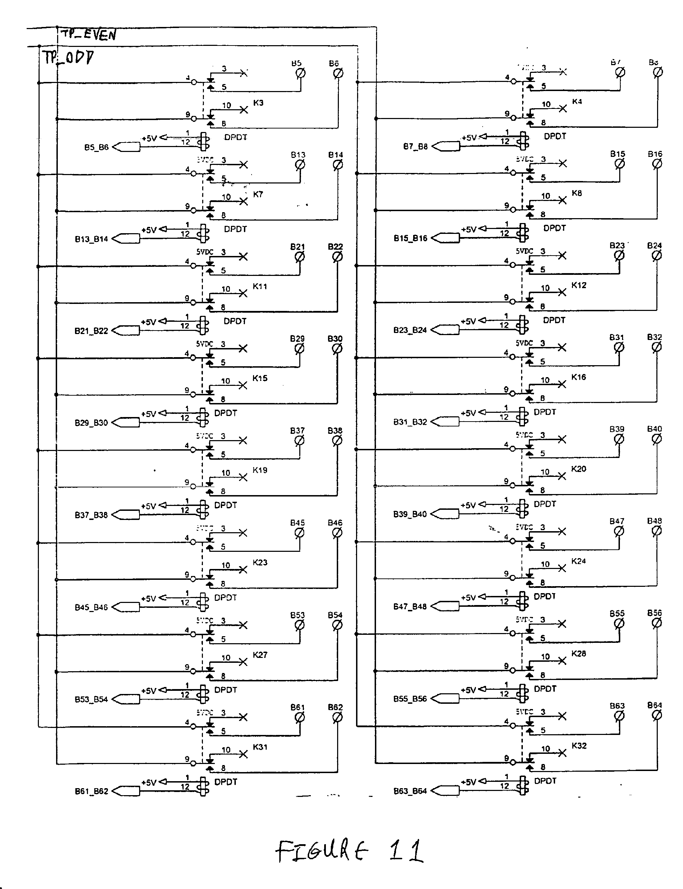

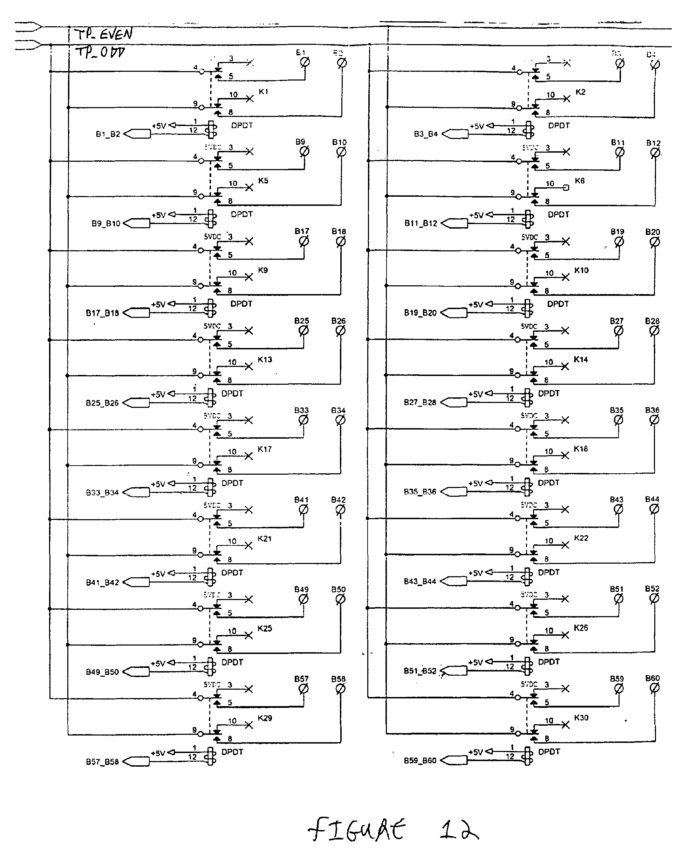

Figures 10-12 illustrate, in greater detail, various components, of EBOB 300, according to an embodiment of the invention.

The EBOB 300 includes one hundred and twenty one test points(denoted B1-B121), a resistor network and sixty one relays that select between the multiple test points. The amount of relays and test points were selected to emulate a certain interface unit. Other interface units that include a different amount of test points can be emulated by another EBOB.

The inventor found relaying only on the resistor network of the SIU 200 can cause measurement errors, due to the slight potential difference between the ground of the EBOB 300 and the SIU 200. Accordingly, the EBOB 300 has its own resistor network.

The EBOB 300 is connected to the SIU 200 via an multiple pin connector. This connecter conveys: (i) seven address bits (Addressl-Address7) for selecting the test point that receive a signal out of the one hundred and twenty one test points; (ii) output voltage ±30VOUT, (iii) a five volts DC voltage, (iv) twelve volts voltage, (v) relay control signals (Voltage/R_relay, Rlow/Rhigh_relay, and odd/even_column_relay) that select whether to provide voltage or resistance to odd test points (TP_ODD) or to even test points (TP_EVEN), to select the high range or low range resistors, and to select an odd column or even column, and (vi) digital and analog ground.

The functionality of that connector is illustrated by TABLE 6:

**TABLE 6**

| **Pin number** | **SIU Signal** | **EBOB function** | **Type of signal** |
|---|---|---|---|
| 2 | Output 9 | Address 1 (A1) | HCMOS output |
| 3 | Output 7 | Address 2 (A2) | HCMOS output |
| 6 | Output 5 | Address 3 (A3) | HCMOS output |
| 8 | ±30VOUT | Voltage | ±32 VDC |
| 9 | Resistance - high range | R high | 1 - 31 kΩ |
| 10 | R1 | Controls relay K65 | Open collector |
| 11 | R2 | Controls relay K66 | Open collector |
| 12 | R3 | Controls relay K67 | Open collector |
| 13 | R4 | Controls relay K68 | Open collector |
| 14 | R5 | Controls relay K69 | Open collector |
| 15 | Output 14 | (spare output) | Open collector |
| 16 | Output 12 | Address 4 (A4) | Open collector |
| 17 | Output 10 | Address 5 (A5) | Open collector |
| 18 | Analog ground | Analog ground | - |
| 20 | 5 VDC | Power supply | DC supply |
| 21 | Output 8 | Address 6 (A6) | HCMOS output |
| 22 | Output 6 | Address 7 (A7) | HCMOS output |
| 33 | Output 15 | Voltage/R_ relay (K63) | Open collector |
| 34 | Output 13 | Rlow/Rhigh_relay (K62) | Open collector |
| 35 | Output 11 | Odd/even_column_relay (A0), (K64) | Open collector |
| 36 | 12 VDC (unregulated) | | DC supply |
| 37 | Digital ground | Digital ground | - |

TABLE 7 illustrates the connectivity of the resistor network within EBOB:

**TABLE 7**

| | First normally open contact | First normally closed contact | First ground terminal | Second normally open contact | Second normally closed contact | Second ground terminal | Control |
|---|---|---|---|---|---|---|---|
| K65 | Not connected (NC) | R3, R4 | R3, K62(Rhigh) | NC | R10, R11 | K62(Rlow), R10, R11 | R1 |
| K66 | NC | R4, R5 | R3, R4 | NC | R12, R13 | R10, R11, R12 | R2 |
| K67 | Not connected (NC) | R6, R5 | R5, R4 | NC | R14, R13 | R13, R12 | R3 |
| K68 | NC | R7, R8 | R5, R6 | NC | R14, R15 | R13, R14 | R4 |
| K69 | Not connected (NC) | R9, R15, G | R7, R8 | NC | R9, R12, G | R14, R15 | R5 |

There are sixty one relays that selectively provide signals to a test point out of the one hundred and twenty one test points. Since each relay serves two test points, the odd numbered test point are connected to the normally-open contact of the relays and the even numbered test points are connected to the other contacts of these relays.

The common terminals of the change-over contacts of all sixty one relays are connected together to form a common bus, which receives the selected signal.

Relay K62 selects low or high resistance range. Relay K63 selects resistance or voltage. Relay K64 selects whether the test point is odd or even numbered. For example, to switch a voltage signal to test point 1, relay K63 must be de-energized to select a voltage signal generated by the SIU, relay K64 must also be de-energized to select odd test points.

Seven signals, A1 through A7, can select any one of 256 test points; therefore, all of these control signals must be zero to select test point one as shown in TABLE 8:

**TABLE 8**

| **Selected test point** | **A7** | **A6** | **A5** | **A4** | **A3** | **A2** | **A1** | **A0** |
|---|---|---|---|---|---|---|---|---|
| B1 | 0 | 0 | 0 | 0 | 0 | 0 | 0 | 0 |
| B2 | 0 | 0 | 0 | 0 | 0 | 0 | 0 | 1 |
| B3 | 0 | 0 | 0 | 0 | 0 | 0 | 1 | 0 |
| B4 | 0 | 0 | 0 | 0 | 0 | 0 | 1 | 1 |
| ··· | | | | | | | | |
| B121 | 0 | 1 | 1 | 1 | 1 | 0 | 0 | 0 |

The inventors used an RS-232 compliant protocol for exchanging information between computer 100 and SIU 200. The protocol is conveyed over three wires- Tz, Rx and ground. In the following example an Ascii value is represented by <value>, information that is sent by the computer 100 starts by "C:" and information sent by SIU 200 starts by "SIU". A successful completion of a command is represented by OK, while a failure (or inability to perform a certain command) is denoted by N.

The computer can determine the value of voltage to be supplied, the value of current to be supplied, the shape and characteristics of various wave forms to be provided, the selected test point, whether to provide voltage of resistance, and the like. The waveform (Usually read from a look up table) can be downloaded, one point after the other to the SIU 200.

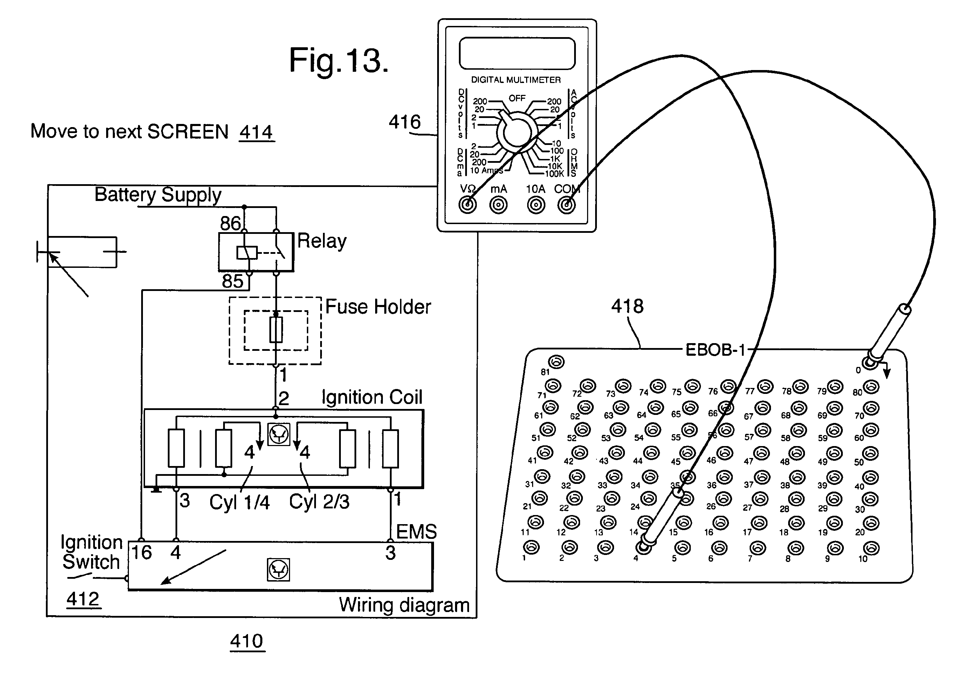

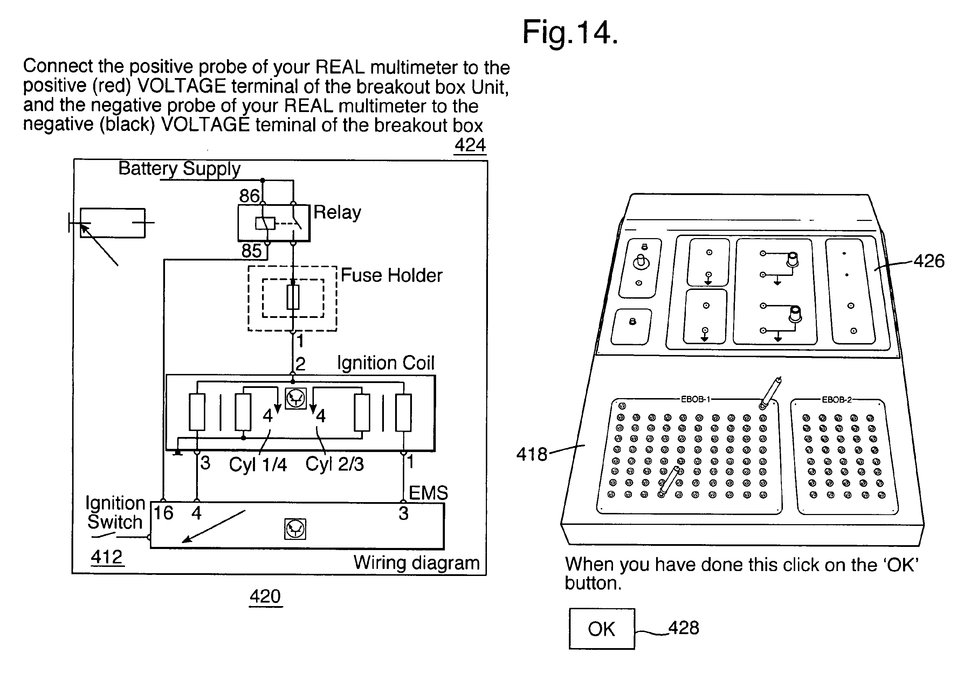

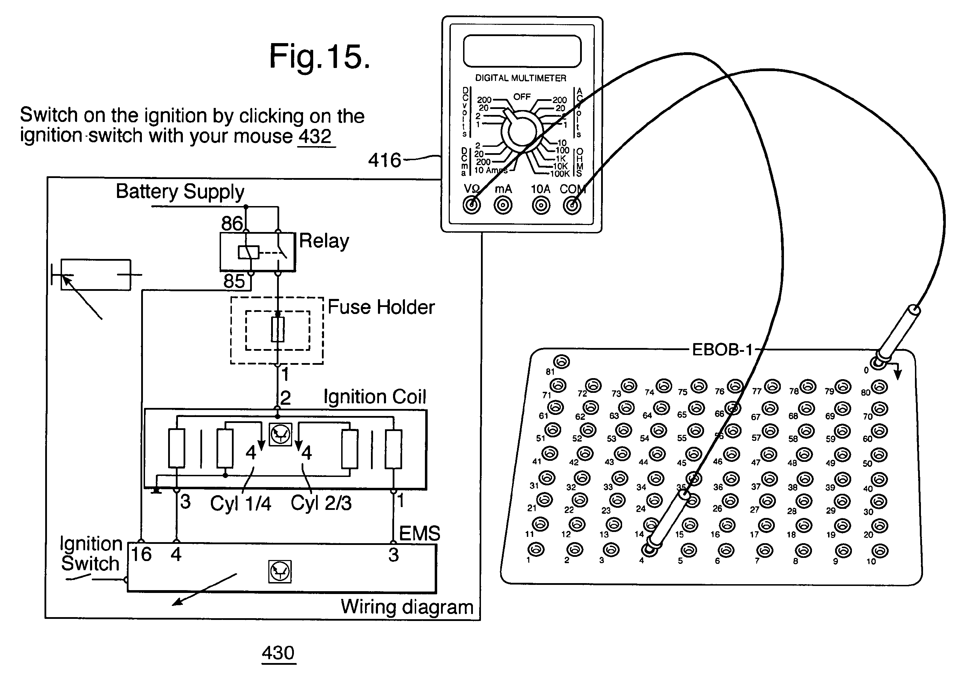

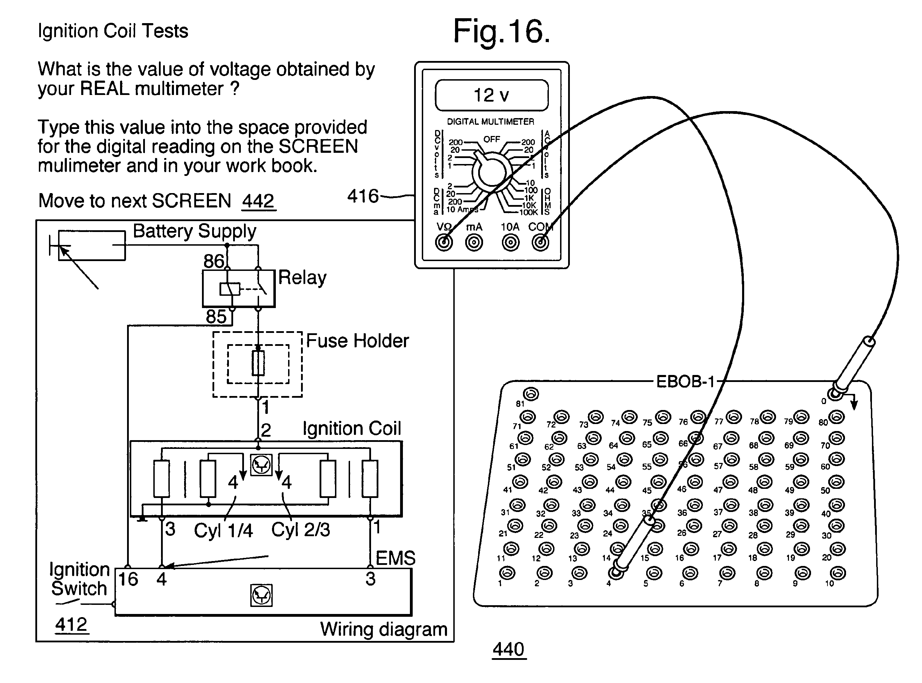

Figures 13-16 illustrate an exemplary screen sequence 400 that is displayed during an interactive simulation, according to an embodiment of the invention.

The sequence 400 starts by an a first screen 410 that includes a wiring diagram 412 of an ignition coil circuit, an instruction 414 ("move to the next screen"), an image 416 of a virtual multi-meter that is virtually connected to two certain test points of an EBOB (image 418), and three-dimensional images of the ignition coils circuitry that is not illustrated for simplicity of explanation. The wiring diagram also includes two arrows that illustrate the points of the ignition wires that are virtually connected to the virtual multi-meter.

Typically, the first screen 410 is preceded by multiple screens that explain the manner the ignition coils works, the objects of the training session and the like.

The first screen 410 is followed by a second screen 420 that includes the wiring diagram 412 of the ignition coil circuit, a first instruction 424 ("connect the positive probe of your REAL multi-meter to the positive (red) VOLTAGE terminal of the breakout box unit, and the negative probe of your REAL multi-meter to the negative (black) VOLTAGE terminal of the breakout box"), an image 416 of the EBOB and the terminals that should be connected to certain test points of the EBOB, a second instruction ("when you have done this click on the 'OK' button") and a virtual 'OK' button 428. The wiring diagram also includes two arrows that illustrate the points of the ignition wires that should be connected, via the certain test points, to the real multi-meter. The second screen 420 also illustrates SIU 200 (image 426).

The second screen 420 is followed by a third screen 430 in which the end user is requested, by command 432 to switch on the ignition by clicking on the virtual ignition switch that appears at the wiring diagram 412 of the ignition coil circuit. The third screen 430 also includes an image 416 of a virtual multi-meter that is virtually connected to two certain test points of an EBOB.

The third screen 430 is followed by a fourth screen 440 in which the end user is requested, by command 442 to enter the value of voltage measured by the real multi-meter. The end user is requested to enter the measured voltage into a space provided for digital reading on the virtual multi-meter.

It is noted that the screens can also refer to and even illustrate the panel of the SIU, especially in initially measurements or whenever a measurement is made by connecting test equipment to the panel of the SIU.

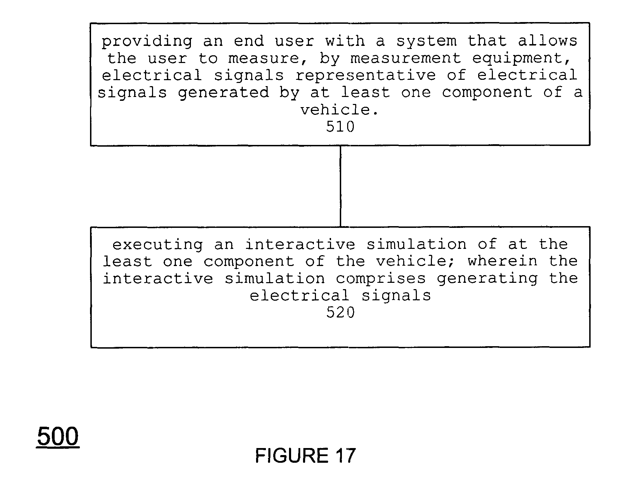

Figure 17 is a flow chart illustrating a method 500 of training an end user, box, according to an embodiment of the invention.

Method 500 starts by stage 510 of providing an end user with a system that allows the user to measure, by measurement equipment, electrical signals representative of electrical signals generated by at least one component of a vehicle.

Stage 510 is followed by stage 520 of executing an interactive simulation of at the least one component of the vehicle; wherein the interactive simulation comprises generating the electrical signals.

Conveniently stage 520 includes at least one of the following: relaying electrical signals to selected test points of the system; providing a selected resistance between selected test points; receiving an input from an end user representative of a measurement executed by the end user by using the measurement equipment; evaluating the input provided by the end user, and the like.

According to an embodiment of the invention the interactive simulation can be updated in various manners, such as by downloading files over a network. The update can reflect changes in the manufacturer testing procedures, vehicle updates, and the like.

The present invention can be practiced by employing conventional tools, methodology and components. Accordingly, the details of such tools, component and methodology are not set forth herein in detail. In the previous descriptions, numerous specific details are set forth, such as shapes of test structures and materials that are electro-optically active, in order to provide a thorough understanding of the present invention.
However, it should be recognized that the present invention might be practiced without resorting to the details specifically set forth.

Only exemplary embodiments of the present invention and but a few examples of its versatility are shown and described in the present disclosure. It is to be understood that the present invention is capable of use in various other combinations and environments and is capable of changes or modifications within the scope of the inventive concept as expressed herein.

## Claims

1. A system comprising:
a signal generator adapted to generate electrical signals representative of electrical signals generated by at least one component of a vehicle;
an interface unit adapted to receive the generated electrical signals and to allow measurement equipment to measure the generated electrical signals; and
a computer readable medium having stored thereon a set of instructions, the set of instructions, when executed by a processor, cause the processor to control an interactive simulation of at the least one component of the vehicle; wherein the interactive simulation comprises generating the electrical signals.

2. The system according to claim 1 wherein the interface unit comprises many test points.

3. The system according to claim 1 wherein the signal generator comprises an interface adapted to receive the generated electrical signals and to allow measurement equipment to measure the generated electrical signals.

4. The system according to claim 1 wherein the interface unit comprises multiple relays for selectively providing electrical signals to selected test points.

5. The system according to claim 1 wherein the interface unit comprises a resistor network for selectively introducing a selected resistance between two test points.

6. The system according to claim 1 wherein the interactive simulation comprises receiving an input from an end user representative of a measurement executed by the end user by using the measurement equipment.

7. The system according to claim 6 wherein the interactive simulation comprises evaluating the input provided by the end user.

8. The system according to claim 1 further comprising a computer that comprises the controller.

9. The system according to claim 8 wherein the computer is adapted to receive set of instruction updates.

10. A method for fault simulation, comprising:
providing an end user with a system that allows the user to measure, by measurement equipment, electrical signals representative of electrical signals generated by at least one component of a vehicle; and
executing an interactive simulation of at the least one component of the vehicle; wherein the interactive simulation comprises generating the electrical signals.

11. The method according to claim 10 wherein the executing comprises relaying electrical signals to selected test points of the system.

12. The method according to claim 10 wherein the executing comprises providing a selected resistance between selected test points.

13. The method according to claim 10 wherein the interactive simulation comprises receiving an input from an end user representative of a measurement executed by the end user by using the measurement equipment.

14. The method according to claim 13 further comprising evaluating the input provided by the end user.

15. The method according to claim 10 further comprising updating the interactive simulation.

16. A system comprising:
a signal generator adapted to generate electrical signals representative of electrical signals generated by at least one component of a vehicle;
an interface unit adapted to receive the generated electrical signals and to allow measurement equipment to measure the generated electrical signals; and
a computer, coupled to the signal generator, the computer is adapted to execute an interactive simulation of at least one component of a vehicle; wherein the interactive simulation comprises generating the electrical signals.

17. The system according to claim 16 wherein the interface unit comprises many test points.

18. The system according to claim 16 wherein the signal generator comprises an interface adapted to receive the generated electrical signals and to allow measurement equipment to measure the generated electrical signals.

19. The system according to claim 16 wherein the interface unit comprises multiple relays for selectively providing electrical signals to selected test points.

20. The system according to claim 16 wherein the interface unit comprises a resistor network for selectively introducing a selected resistance between two test points.
